# EUROPEAN PATENT SPECIFICATION

(11) **EP 3 253 018 B1**
(45) Date of publication and mention of the grant of the patent: **26.09.2018**
(21) Application number: 16172533.8
(22) Date of filing: 01.06.2016
(51) Int. Cl.: H04L 29/06

(54) **NETWORK INTRUSION DETECTION BASED ON GEOGRAPHICAL INFORMATION**
ERKENNEN EINES NETZWERKEINDRINGENS BASIEREND AUF GEOGRAFISCHEN INFORMATIONEN
DÉTECTION D'INTRUSION DANS UN RÉSEAU BASÉE SUR DES INFORMATIONS GÉOGRAPHIQUES

(43) Date of publication of application: 06.12.2017
(73) Proprietor: NATEK Technologies GmbH, 85748 Garching (DE)
(72) Inventor: ERTUGRUL, Necati, Ankara (TR); ERPOLAT, Ahmet, Timucin, Ankara (TR); ERPOLAT, Muhammet, Tolga, Ankara (TR)
(74) Representative: Richly & Ritschel Patentanwälte PartG mbB

(56) References cited:
- AU-A1- 2010 201 860
- US-A1- 2005 136 891
- US-B1- 7 779 458
- LESKOVEC JURE ET AL: "Geospatial Structure of a Planetary-Scale Social Network", IEEE TRANSACTIONS ON COMPUTATIONAL SOCIAL SYSTEMS, IEEE, USA, vol. 1, no. 3, 1 September 2014 (2014-09-01), pages 156-163, XP011571235, DOI: 10.1109/TCSS.2014.2377789 [retrieved on 2015-01-22]

## Description

The present invention relates to a method and a system for the detection of an intrusion in a computer network based on geographical information.

The intrusion of computer networks by malicious applications such as malware, key loggers, viruses or trojans and information leakages caused thereby poses an increasing risk for businesses and private persons alike. In particular, valuable and/or confidential information, such as intellectual property, is at risk to be disseminated or stolen by criminal third parties.

These malicious applications are generally unintentionally executed by the operating system of an infected host and thus run as a process or thread on said operating system. Current strategies to detect and eliminate such malicious application include the use of scanners that search the storage media of the host for known signatures of the malicious application.

US 2005/136891 A1 describes the wireless LAN intrusion detection based on location.

However, due to a virtually infinite number of different malicious applications that emerge on a daily basis the identification remains a difficult task to undertake. In particular, this is due to the fact that a new signature for every new malicious application has to be derived and that it can only be provided to the scanners once said application has already infected at least one host. Thus, by the time adapted signatures are provided and spread to the various systems worldwide the malicious application may have already spread considerably and may have caused severe damage.

Therefore, one object of the present invention is the provision of a method and a system for the detection of the intrusion in a computer network that is not dependent on the adaptation and provision of signatures. It is a further object of the present invention to provide a method and a system to detect such intrusions in real time.

According to the present invention, these objects are achieved by the method of independent claim 1 and the system of independent claim 11. Further advantageous embodiments are given in the dependent claims.

In particular, the present invention provides a method for identifying an intrusion in a computer network, wherein the method comprises the steps of: providing a first data set comprising at least one geographical data item associated with a geographical location; collecting a second data set comprising at least one geographical data item derived from the network traffic of at least one process executed on at least one node of the computer network, wherein the geographical data item is associated with a geographical location; comparing the at least one geographical data item of the second data set with the at least one geographical data item of the first data set; and generating an alert indicating a possible intrusion of the computer network based on the result of the comparison of the at least one geographical data item of the second data set with the at least one geographical data item of the first data set.

One underlying concept of the present invention therefore is the collection of a geographical information derivable from the network traffic of a process executed on a node of the network and comparison thereof with a predetermined set of geographical information. The geographical information is associated with a geographical location, preferably such as a country, a region, or a city. Thus, according to the method of the present invention the network traffic of each active process executed on at least one node of the computer network is analyzed/monitored in order to determine if network traffic to suspicious geographic locations, preferably countries, is established. The analysis of the network traffic and the active/executed processes of a given node is preferably achieved by a client executed on that node. If by means of the comparison it is found out that the collected geographical location is or is not comprised by the predetermined set of geographical locations, this might be an indication of a possible intrusion of the computer network and an alert is generated.

A present intrusion may be identified by the present invention because during the comparison step it is established whether a node or process executed thereon connects to or is connected from a geographical location not in the set of known geographical locations. In other words, the computer network may, e.g., have been intruded by a malicious application that is communicating with a counterpart in a suspicious geographical location known to be the frequent source of malware or a network communication is suddenly started with a geographical location that has beforehand been unknown to or unusual for the node or the process executed thereon. Thus, not only a potentially infected node of a computer network may be identified by the present invention but also a potentially malicious process executed thereon. The method according to the invention preferably is a computer implemented method.

The computer network can be any type of network known to the skilled person which comprises at least two nodes that can exchange data. Said nodes of the computer network are connected by network links which can, for example, be established by cable media or wireless media. Examples for a computer network are the internet, or an intranet. Preferably, the computer network of the present invention is an intranet connected to, preferably by means of a gateway, the internet.

By the term "providing of a data set" any collection of a data set is comprised that involves at least one geographical data item associated with a geographical location that results in a reference data set comprising at least one geographical data item against which the second data set may be compared. The "first data set" can also be designated "reference data set". Preferably, at least one of the geographical data items of the first data set is a predetermined data item. More preferably all of the geographical data items in the provided first data set are predetermined. By the term "predetermined" it is meant that the provision of the data set is carried out prior to the collection of the second data set and consecutive comparison step according to the inventive method.

The predetermined data items of the first data set can preferably be defined, e.g., by an administrator of the computer network. Also preferably, the predetermined data items of the first data set can be derived from the network traffic of at least one node and/or process executed thereon. More preferably, said node has been verified not to be intruded by malware. In other words, the node and/or process thereon are preferably not intruded by malicious software. This is generally the case if a node of the computer network is newly set up. Even more preferably the monitoring of the network traffic of a non-intruded node in order to provide the first data set is carried out for a predetermined period of time, e.g., for at least 1h or at least 1 day, preferably for about 1 h to about 5 h. This way, the non-intruded node or process executed thereon will most likely have established network connections with all relevant counterparts which should be non-suspicious.

Preferably, the at least one geographical data item in the first data set is provided by collecting at least one geographical data item derived from the network traffic of at least one process executed on at least one node of the computer network. Even more preferably, said at least one geographical data item in the first data set is provided by collecting at least one geographical data item derived from the network traffic of at least one process executed on at least one node of the computer network a predetermined period of time z. Preferred examples of z are at least 1 h, a period of ≥ 1 h and ≤ 24 h, ≥ 1 h and ≤ 12 h, ≥ 1 h and ≤ 6 h, or ≥ 1 h and ≤ 2 h.

By the term "collection of a second data set" any monitoring, measuring, recording and/or storing of data items is comprised. The collected data items in the second data set comprise at least one geographical data item derived from the network traffic of at least one process executed on at least one node of the computer network, wherein the geographical data item is associated with a geographical location.

As will be explained in more detail below the geographical data items in the first or second data set preferably comprise at least part of a source network address (preferably a source IP address), at least part of a destination network address (preferably a destination IP address) and/or a location data item derived from source network address or destination network address, a source port or a destination port. It is known to the skilled person, that each node of a computer network that uses the Internet Protocol (IP) for communication is assigned an Internet Protocol address (IP address). An IP address serves two principal functions: host or network interface identification and location addressing. Therefore, each IP address is associated with a geographical location. As IP addresses are comprised in the network traffic (in particular as source IP address and/or as destination IP address) a geographical location of the sending and/or receiving node of the computer network can be derived from the network traffic of one of the two communicating nodes. Therefore, the geographical data items preferably comprise at least part of an IP address, more preferably at least part of a source IP address and/or a destination IP address, and are associated with a geographical location. In other words, a geographical location can be derived of a geographical data item associated with a geographical location.

In the comparison step according to the invention the data items of first and second data set are compared for consistency or inconsistencies. The comparison may be carried out for single data items, a plurality of data items, or all data items comprised in the data sets. By the term "comparing" in said method step it is preferably meant to determine whether for a given data item in the second data set a corresponding, preferably an identical, data item in the first data set is present or not present. More particular, it may preferably be compared whether the second data set comprises at least one geographical data item for which a corresponding geographical data item is present in the first data set. Even more preferred it is compared whether the second data set comprises at least one geographical data item for which no corresponding geographical data item is present in the first data set.

Based on the result of the comparison an alert is generated, e.g. an alarm signal may preferably be raised. Advantageously, since the collected geographical data items preferably comprise the source network address of the node, such as its IP address in the network, said node can easily be identified. Consequently, the identified node may preferably be subjected to suitable counter measures, such as removal from the network, shut-down of the intruded node, and/or forensics to identify the malicious application.

Preferably, the data item of the first and/or second data set, in particular the geographical data items, is derived from the traffic of a network using the IP protocol. More preferably, it is derived from an Ethernet frame. As known to the skilled person, Ethernet frames comprise header fields and information fields, wherein the information field may comprise further header fields of higher OSI layers.

Preferably, the data item of first and second data sets comprises, or preferably consists of, a header field. This advantageously reduces the amount of data that needs to be handled, stored and/or compared by the system. Preferably, the data item of first and second data sets comprises a header field that is a header field of the network layer, the transport layer, and/or the session layer of the OSI layers. Most preferably, these header fields are header fields of the TCP and/or UDP header.

Preferable fields of the network layer are selected from the group consisting of the IP frame (comprising IP header and IP information field), the IP header field, the source address field, the destination address field, the protocol field and/or the information field of the IP frame.

Preferable fields of the transport layer are selected from the group consisting of the TCP frame (comprising TCP header and TCP information field), the TCP header field, the sequence number field, the information field of the TCP frame (comprising UDP header and UDP information field), the UDP frame, the UDP header field, the length field, the information field of the UDP frame, the source port field, the destination port field and/or the checksum field.

Also preferably, the geographical data item of first and second data sets comprises at least one field of an Ethernet frame selected from the group consisting of the source address field, the destination address field and/or a a location data item derived from the source address field and/or the destination address field.

Preferably, the geographical data item of first and second data set comprises at least a part of a source IP address, a part of a destination IP address, and/or a location data item derived from source IP or destination IP address and optionally at least one of the elements selected from the group consisting of source port, destination port and network traffic type. More preferably, the geographical data item of first and second data set comprises the source IP address, the destination IP address, and/or a location data item derived from source IP or destination IP address and optionally at least one of the elements selected from the group consisting of source port, destination port and network traffic type. The traffic type can preferably be TCP or UDP.

The location data item may be any data item that allows the identification and/or derivation of a geographical location. As known to the skilled person, IP addresses or ranges thereof are usually assigned based on geographical locations, such as regions or countries. However, oftentimes no continuous IP address ranges are assigned per geographical location so that one geographical location, such as a country, may be assigned various IP address ranges. Furthermore, some IP address ranges are assigned to organizations instead of geographical locations. In order to derive a geographical information from a given IP address, such as a source IP address and/or as destination IP address, the skilled person can, e.g., either look up a given IP address or IP address range to derive the geographical location or he can monitor the route to a given IP address to derive the information of the geographical location of the IP address. As another preferred example, the skilled person could trace the route to a node with a given IP address assigned to an organization or country and would learn the geographical location of the node with this IP address from the path the packets travelled across the internet.

Once the geographical location is known the location data item can then contain only a reference to the geographical location, preferably to a country, such as a two-letter abbreviation for a country, e.g. US for the United States. This allows for a quicker comparison and better maintenance of the data items in the second and first data set.

While the generation of the alert according to the present invention can be based on every desired outcome of the comparison step it is preferably generated in the event that the second data set comprises at least one geographical data item for which no corresponding, more preferably no identical, geographical data item can be found in the first data set. This has the advantage that the first data set generally does not have to contain a high number of geographical data items and thus the comparison step and maintenance is easy to achieve. This is especially true in the preferred embodiment wherein the geographical data items comprise location data items, such as a two-letter abbreviations for each country. Additional advantages arise if such a generation of an alert is combined with the provision of the first data set by means of monitoring the network traffic of a given node for a specific period amount of time (as described above).

In a further preferred embodiment an alert is only generated in the event that the second data set comprises at least a predetermined number x (threshold) of identical geographical data items for which no corresponding, preferably identical, geographical data item can be found in the first data set. In other words, an alert is not generated immediately if a single geographical data item in the second set turn up and cannot be found in the first data set but a certain threshold of incidents of an identical geographical data item must be present. Preferably, x is selected from at least 5, 10, 50 or 100. In other words, at least a number of 5, 10, 50 or 100 identical geographical data items must be present in the second data set but not a single corresponding, preferably identical, geographical data item must be present in the first data set before an alert is generated. This threshold has the advantage that the sensitivity of method of the present invention can be adjusted and false positives can be reduced or even eliminated. Even more preferably x can be adjusted dynamically. This way, a system administrator can easily react to changing threat levels. In a further preferred embodiment, the predetermined number x, i.e. the threshold, is dependent on the the geographical location. In other words, the predetermined number x is set to an individual value for every geographical location. For example, the x could be set to 20 for the geographical location of Germany, set to 10 for the geographical location of the United States and 2 for the geographical location of China or Russia. This way, different sensitivities for given geographical locations can be achieved.

In a further embodiment of the present invention the second data set can be erased, preferably after a predetermined amount of time. More preferably, the erasing of the second data set is carried out periodically, after a phase of data collection for a predetermined amount of time the second data set is erased and the data collection is restarted, followed by an erasing step and so on.

Preferably, while the second data set may be collected on a specific first node whose network traffic is analyzed it is stored on a further node that is different from said first node. This way, multiple second data sets of multiple nodes can advantageously stored in one place, more preferably a data base, executed on the further node. This has the additional advantage that a comparison (of multiple second data sets) can easily be achieved in one place.

Preferably, the geographical data items in the second data set are collected over a predetermined amount of time y. Especially in combination with the threshold x described above this has the advantage that the frequency of network connections to a geographical location not comprised by the first data set can be monitored and an alert can be based thereon. For example, if the second data set is erased and geographical data items are collected for 12 hours and only 2 suspicious geographical data items are found which are not comprised by the first data set this might not be an indication of an intrusion of the network since malware that, e.g. connects to bot nets, establishes network connections much more frequently.

Preferably, the first data set additionally comprises at least one node data item and/or the second data set additionally comprises at least one node data item, wherein the node data items are associated with a node of the computer network, wherein the at least one node data item of the first data set is linked to the at least one geographical data item of the first data set and the at least one node data item of the second data set is linked to the at least one geographical data item of the second data set, wherein during the comparison step the at least one geographical data item and the node data item linked thereto of the second data set are compared to the at least one geographical data item and the node data item linked thereto of the first data set, and wherein the alert is generated in the event that the second data set comprises at least one combination of a geographical data item with at least one additional node data item linked thereto for which no corresponding, preferably identical, combination of a geographical data item with at least one additional node data item linked thereto can be found in the first data set. Most preferably, the node data item is associated with a process executed on a node of the computer network.

A node data item can be any data item that provides further information regarding a node of the computer network and preferably a process executed on such a node. Preferably, the node data item is selected from the group consisting of the process name of a process executed on a node, the process path of a process executed on a node, the process identifier (process ID) of a process executed on a node, the process checksum of a process executed on a node and the media access control (MAC) address of the node. More preferably the node data item only comprises information regarding an active process executed on a node. In this case the node data item may preferably be designated process data item. More preferably the process data item is selected from the group consisting of the process name of a process executed on a node, the process path of a process executed on a node, the process identifier (process ID) of a process executed on a node and the process checksum of a process executed on a node. Preferably, the process name, process path, process ID, process checksum and/or MAC address are collected by a client likewise executed on the same node whose network traffic and/or processes are analyzed/monitored. The MAC address can be collected by a client executed on the same node and/or a client executed on a different node, e.g. a client used to monitor the network traffic.

The process ID (also referred to as PID) is a number used by most operating system kernels to uniquely identify an active process. Advantageously, the process ID thus allows for the unambiguous identification of an active process involved in suspicious network traffic. Likewise, the process path, which is preferably the absolute path to the active process, can be used to unambiguously identify a suspicious process executed on a node.

By the term "linked to" it is meant that a given node data item and geographical data item are collected and/or stored in a manner such that the relation between the two data items is kept. In other words, if geographical data item and node data item are linked to one another than it is derivable which node or process thereon is the source and/or the destination of the network traffic from which the geographical data item was derived.

Thus, the method according to the invention tracks/analyzes the network connections of each active process executed on a node and links information regarding the process (node data item) to the geographical information of the network traffic (geographical data item) established by said process.

Advantageously, the node data item comprised by first and/or second data set allows for an improved control of the sensitivity of the method according to the invention. Specifically, during the comparison step the linked geographical and node data items of one data set are compared to the linked geographical and node data items of the other data set and an alert is generated based on this more detailed comparison. In other words, due to the inclusion of a linked node data item into the data sets suspicious activities of a specific node and/or process executed thereon can be identified.

Furthermore, the additional node data item advantageously allows for an improved identification of a possibly intruded node and/or process executed thereon.

In analogy to the embodiment wherein no additional node data item is present in either of the data sets the second data set preferably comprises at least a predetermined number x of identical combinations of linked geographical and additional node data items. This way and advantageously, a threshold x is introduced into the method of the present invention. Thus, an alert is only generated in the event that the second data set comprises at least a predetermined number x (threshold) of identical geographical data items linked to a node data item for which no corresponding, preferably identical, geographical data item linked to a node data item can be found in the first data set. Preferably, x is selected from at least 5, 10, 50 or 100. This threshold has the advantage that the sensitivity of method of the present invention can be adjusted and false positives can be reduced or even eliminated. Even more preferably x can be adjusted dynamically. This way, a system administrator can easily react to changing threat levels. In a further preferred embodiment, the predetermined number x, i.e. the threshold, is dependent on the geographical location. In other words, the predetermined number x is set to an individual value for every geographical location. For example, the x could be set to 20 for the geographical location of Germany, set to 10 for the geographical location of the United States and 2 for the geographical location of China or Russia. This way, different sensitivities for given geographical locations can be achieved.

Preferably, the geographical data items linked to the node data items in the second data set are collected over a predetermined amount of time y. Especially in combination with the threshold x described above this has the advantage that the frequency of network connections of a specific node or process executed thereon to a geographical location not comprised by the first data set can be monitored and an alert can be based thereon. Thus, the method according to the present invention can determine the number of network connections to specific geographical locations, preferably UDP connections, for configurable time frames for every active process executed on a node to generate an alert in the event that a certain threshold of connections to and/or from suspicious locations are established.

As discussed before, the collection of the data items, more preferably of the second data set, can be carried out by any adequate means known to the skilled person. Preferably, the geographical data items and/or the node data items are collected by a client executed on the node whose network traffic is analyzed in order to derive the geographical data item. Also preferably, collection of the geographical data items and/or the node data items, preferably the MAC address, is carried out by a client executed on a node different from the node whose network traffic is analyzed. This has the advantage that the client cannot be influenced by a malicious software already present on the node whose network traffic is analyzed.

Preferably, a client for the collection of the second data set is executed on more than one node, more preferably on every node, of the computer network.

The collected data items are preferably stored in a database. Preferably, such a database is a relational database such as an SQL database and/or a big data platform such as a Vertica Analytic Database, etc. that stores the second data set and/or the first data set. This database can advantageously act as the means to efficiently carry out the comparison step according to the present invention.

The comparison step of according to the present invention can be carried out on/by any node of the network. Preferably it is carried out on a node different from the node whose data traffic is analyzed.

The nodes of the computer network according to the present invention can be any device connectable to the internet. Preferably, the nodes of the computer network are independently selected from the group consisting of a PC, a mobile device, a mobile phone, a terminal, a network sniffer, a network bridge, a network switch, a network hub, a bridge, a gateway and a router.

Each of the nodes of the network can execute an operating system (OS). For the purposes of this invention also firmware, e.g. executed on a switch or gateway, is considered an OS. Various OS are known to the skilled person, non-limiting examples including Windows, MAC OS, Linux, Unix, Android or Apple iOS.

The second data set preferably comprises an additional data item (a data stamp) referencing the time of collection of each data item in second data set. More preferably, if more than one data item, i.e. geographical data item and node data item are collected, said data items are grouped by use of this data stamp, i.e. by the time the network traffic occurred. Such a data stamp can, for example, be derived from the internal clocks of the network node(s). More preferably, the internal clocks of said nodes are synchronized, preferably by means of an NTP-server present in the network. Even more preferably the time stamp is generated during the storage of the data item of a data set into a database. Current databases offer the possibility to automatically assign a time stamp upon entry of a data item.

In another aspect of the present invention a computer system is provided. Said computer system is suitable to carry out the method according to the invention. In particular, the computer system comprises a computer network of at least two nodes and is suitable to detect an intrusion therein.

In the following the computer system according to the invention is described in more detail. As will be appreciated by the skilled person the features of said system correspond to those described above with regard to the method of the invention. Therefore, the following description will focus on some of the main aspects of the computer system while all further features described for the method likewise apply for the computer system.

The computer system according to the invention comprises at least a first node and at least a second node interconnected via a network link to create a computer network and at least a first client and at least a second client. The second client is adapted to collect a second data set comprising at least one geographical data item derived from the network traffic of at least one process executed on at least one node of the computer network, wherein the geographical data item is associated with a geographical location; the first client is adapted to compare the at least one geographical data item of the second data set with the at least one geographical data item of a provided first data set and is adapted to generate an alert indicating a (possible) intrusion of the computer network based on the result of the comparison of the at least one geographical data item of the second data set with the at least one geographical data item of the first data set.

The computer system is adapted to transmit network data utilizing a network protocol, preferably an internet protocol, more preferably the Ethernet protocol.

The clients may be hardware or software modules. Preferably, the second client is a software module executed by the OS of the node whose network traffic is analyzed. Preferably, the first client is a database, more preferably it is a relational database.

Furthermore, the computer system according to the present invention may comprise, as a further node, a device to synchronize the clocks of the nodes of the network. Preferably, this device is an NTP-server.

The features described for the method and the system according to the present invention are freely combinable as long as nothing other is explicitly stated and/or as long as no obvious contradiction would arise from such a combination.

Further advantages, details and features of the present invention result from the following embodiments of the present invention. Thereby, the following is shown:

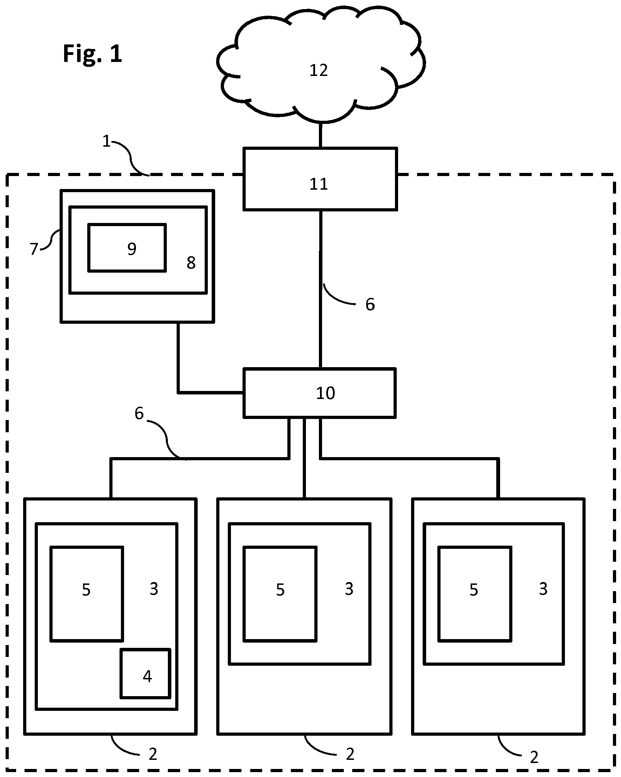

- Figure 1:: a schematic view of a computer system according to one embodiment of the invention;

Figure 1 gives a schematic view of a computer system (1) according to one embodiment of the invention.

The computer system comprises an intranet (1) which is connected to the internet (12) by means of a gateway node (11). The intranet (1) comprises three second nodes (2).

The second nodes (2) and the gateway (11) are connected to a network switch (10) by network links (6).

The second nodes (2) comprise operating systems (3) installed and executed thereon. The operating systems of the nodes (2) are Microsoft Windows operating systems.

On each of the second nodes (2) a second software client (5) is installed that is executed by the operating system of the second nodes. These second software clients (5) are adapted to monitor the network traffic that originates from the process of their respective node they are executed on. In addition, these second software clients are adapted to collect the data items of the second data set, i.e. both the geographical data item derivable from the network traffic of the processes executed on the node and the node data item of node and processes.

A first software client (9) is installed and executed on a first node (7) which is connected to the network via network switch (10). The first node (7) runs a Linux OS (8) which executes the first software client (9). The first software client (9) comprises a relational database that comprises the second data sets collected by the second clients (5) of the second nodes (2) and sent to the first node (7) by means of the network links (6). The relational data base furthermore comprises a first data set that comprises predetermined data items. In particular, it comprises the geographical data items and node data items of the non-intruded second nodes (2) that were collected for a predetermined period of time, in particular 2 hours.

The first software client (9) is adapted to compare the linked geographical data items and the node data items of the second data set to those of the first data set and generate an alert in the event that the second data set comprises at least a predetermined number of x = 10 identical combinations of a geographical data item linked to a node data item for which no corresponding combination of a geographical data item linked to a node data item can be found in the first data set. This comparison is easily achieved by means of the relational database.

The second data sets stored in the database is erased every 12 hours. Therefore, the second data sets are collected over a predetermined period of time of y = 12 hours.

As can further be taken from figure 1, the network (1) has been intruded by a malicious software (4). Said malicious software (4) is executed on one of the second nodes (2) and generates additional network traffic to specific geographical locations not comprised by the first data set. In particular, the malicious software contacts a further node with a specific IP address not comprised by the first data set stored in the relational database of the first software client (9) 5 times an hour.

Based on the comparison of the second data set of the intruded node with the first data set (comprising the first data set derived from the un-intruded node) an alert will thus be generated by the first client (9) after about 2 hours. In turn, the intruded node as well as the malicious process can be easily identified by analysis of the second data set.

### List of reference numerals:

- 1: Computer network; intranet; computer system
- 2: Second node
- 3: Operating System of second node
- 4: Malicious application executed on second node
- 5: Second software client
- 6: Network link
- 7: First node
- 8: Operating system of first node
- 9: First software client; comprising relational database
- 10: Network switch
- 11: Gateway
- 12: Internet

## Claims

1. Method for identifying an intrusion in a computer network (1) comprising at least two nodes (7,2,10,11), the method comprising the following steps:
- providing a first data set comprising at least one geographical data item associated with a geographical location and additionally comprising at least one node data item comprising information regarding a process executed on a node (7,2,10,11),wherein the at least one node data item of the first data set is linked to the at least one geographical data item of the first data set;
- collecting a second data set comprising at least one geographical data item derived from network traffic of at least one process executed on at least one node (7,2,10,11) of the computer network and additionally comprising at least one node data item,
**characterized in that**
the geographical data item of the second data set is associated with a geographical location,
the node data item of the second data set comprises information regarding the process executed on the at least one node (7,2,10,11) and
the at least one node data item of the second data set is linked to the at least one geographical data item of the second data set;
- comparing the at least one geographical data item and the linked at least one node data item of the second data set with the at least one geographical data item and the linked at least one node data item of the first data set; and
- generating an alert in the event that the second data set comprises at least one combination of a geographical data item with at least one additional node data item linked thereto for which no corresponding combination of a geographical data item with at least one additional node data item linked thereto can be found in the first data set.

2. The method according to any one of the preceding claims,
wherein the at least one geographical data item of the first and second data set comprises at least an IP address, a part of a source IP address, a part of a destination IP address, and/or a location data item derived from source IP or destination IP address and optionally at least one of the elements selected from the group consisting of source port, destination port and network traffic type.

3. The method according to claim 1 or 2,
wherein the second data set comprises at least a predetermined number x of identical geographical data items.

4. The method according to any one of the preceding claims,
wherein the geographical data items in the second data set are collected over a predetermined period of time y.

5. The method according to any one of the preceding claims,
wherein the at least one geographical data item in the first data set is provided by collecting at least one geographical data item derived from the network traffic of at least one process executed on at least one node (7,2,10,11) of the computer network (1).

6. The method according to any one of the preceding claims,
wherein the second data set comprises at least a predetermined number x of identical combinations of a geographical data item with at least one additional node data item linked thereto.

7. The method according to the preceding claims 1 - 3, 5, or 6,
wherein the combinations of the geographical data item with at least one additional node data item linked thereto in the second data set are collected over a predetermined period of time y.

8. The method according to any one of the preceding claims,
wherein the at least one node data item of the first and second data set comprises at least one element selected from the group consisting of process name, process path, process ID, process checksum and media access control, MAC, address.

9. The method according to any one of the preceding claims, wherein the collection of the second data set is carried out on the same node (7,2,10,11) of the network (1) whose network traffic is analyzed.

10. The method according to any one of the preceding claims, wherein the collection of the second data set is carried out on a different node (7,2,10,11) of the network than the comparison step.

11. Computer system (1) comprising
- at least a first node (7) and at least a second node (2) interconnected via a network link (6) to create a computer network,
- at least a first client (9) and at least a second client (5),
- the second client (5) is adapted to collect a second data set comprising at least one geographical data item derived from network traffic of at least one process executed on at least one node (7,2,10,11) of the computer network and additionally comprising at least one node data item,
- the geographical data item is associated with a geographical location, the computer system (1) being **characterised in that**
- the node data item comprises information regarding the process executed on the at least one node (7,2,10,11) and
- the at least one node data item of the second data set is linked to the at least one geographical data item of the second data set;
- the first client (9) is adapted to compare the at least one geographical data item and the linked at least one node data item of the second data set with the at least one geographical data item and the linked at least one node data item of a provided first data set and is adapted to generate an alert in the event that the second data set comprises at least one combination of the geographical data item with at least one additional node data item linked thereto for which no corresponding combination of the geographical data item with at least one additional node data item linked thereto can be found in the first data set.

12. Computer system (1) according to claim 11 for carrying out a method according to any one of claims 1-10.

## Patentansprüche

1. Verfahren zum Identifizieren eines Eindringens in ein Computernetzwerk (1), das mindestens zwei Knoten (7, 2, 10, 11) umfasst, wobei das Verfahren die folgenden Schritte umfasst:
- Bereitstellen einer ersten Datenmenge, die mindestens einen geographischen Datenposten umfasst, der mit einem geographischen Standort assoziiert ist, und zusätzlich mindestens einen Knotendatenposten umfasst, der Informationen bezüglich eines Prozesses, der auf einem Knoten (7, 2, 10, 11) ausgeführt wird, umfasst, wobei der mindestens eine Knotendatenposten der ersten Datenmenge mit dem mindestens einen geographischen Datenposten der ersten Datenmenge verknüpft ist;
- Erfassen einer zweiten Datenmenge, die mindestens einen geographischen Datenposten umfasst, der aus Netzwerkverkehr von mindestens einem Prozess, der auf mindestens einem Knoten (7, 2, 10, 11) des Computernetzwerks ausgeführt wird, abgeleitet wird, und zusätzlich mindestens einen Knotendatenposten umfasst,
**dadurch gekennzeichnet, dass**
der geographische Datenposten der zweiten Datenmenge mit einem geographischen Standort assoziiert ist,
der Knotendatenposten der zweiten Datenmenge Informationen bezüglich des Prozesses, der auf dem mindestens einen Knoten (7, 2, 10, 11) ausgeführt wird, umfasst und
der mindestens eine Knotendatenposten der zweiten Datenmenge mit dem mindestens einen geographischen Datenposten der zweiten Datenmenge verknüpft ist;
- Vergleichen des mindestens einen geographischen Datenpostens und des verknüpften mindestens einen Knotendatenpostens der zweiten Datenmenge mit dem mindestens einen geographischen Datenposten und dem verknüpften mindestens einen Knotendatenposten der ersten Datenmenge; und
- Erzeugen einer Warnung in dem Fall, dass die zweite Datenmenge mindestens eine Kombination eines geographischen Datenpostens mit mindestens einem damit verknüpften zusätzlichen Knotendatenposten umfasst, für die keine entsprechende Kombination eines geographischen Datenpostens mit mindestens einem damit verknüpften zusätzlichen Knotendatenposten in der ersten Datenmenge gefunden werden kann.

2. Verfahren nach dem vorangegangenen Anspruch,
wobei der mindestens eine geographische Datenposten der ersten und zweiten Datenmenge zumindest eine IP-Adresse, einen Teil einer Quellen-IP-Adresse, einen Teil einer Ziel-IP-Adresse und/oder einen Standortdatenposten, der aus der Quellen-IP- oder Ziel-IP-Adresse und optional mindestens einem der Elemente, das aus der Gruppe bestehend aus Quellanschluss, Zielanschluss und Netzwerkverkehrstyp ausgewählt wird, abgeleitet wird, umfasst.

3. Verfahren nach Anspruch 1 oder 2,
wobei die zweite Datenmenge mindestens eine vorbestimmte Anzahl x von identischen geographischen Datenposten umfasst.

4. Verfahren nach einem der vorangegangenen Ansprüche,
wobei die geographischen Datenposten der zweiten Datenmenge über einen vorbestimmten Zeitraum y erfasst werden.

5. Verfahren nach einem der vorangegangenen Ansprüche,
wobei der mindestens eine geographische Datenposten in der ersten Datenmenge bereitgestellt wird, indem mindestens ein geographischer Datenposten erfasst wird, der aus dem Netzwerkverkehr von mindestens einem Prozess, der auf mindestens einem Knoten (7, 2, 10, 11) des Computernetzwerks (1) ausgeführt wird, abgeleitet wird.

6. Verfahren nach einem der vorangegangenen Ansprüche,
wobei die zweite Datenmenge mindestens eine vorbestimmte Anzahl x von identischen Kombinationen eines geographischen Datenpostens mit mindestens einem damit verknüpften zusätzlichen Knotendatenposten umfasst.

7. Verfahren nach den vorangegangenen Ansprüchen 1-3, 5 oder 6,
wobei die Kombinationen des geographischen Datenpostens mit mindestens einem damit verknüpften zusätzlichen Knotendatenposten in der zweiten Datenmenge über einen vorbestimmten Zeitraum y erfasst werden.

8. Verfahren nach einem der vorangegangenen Ansprüche,
wobei der mindestens eine Knotendatenposten der ersten und zweiten Datenmenge mindestens ein Element umfasst, das aus der Gruppe bestehend aus Prozessnamen, Prozesspfad, Prozess-ID, Prozessprüfsumme und Medienzugangssteuerungsadresse bzw. MAC-Adresse ausgewählt wird.

9. Verfahren nach einem der vorangegangenen Ansprüche, wobei die Erfassung der zweiten Datenmenge auf demselben Knoten (7, 2, 10, 11) des Netzwerks (1) ausgeführt wird, dessen Netzwerkverkehr analysiert wird.

10. Verfahren nach einem der vorangegangenen Ansprüche, wobei die Erfassung der zweiten Datenmenge auf einem anderen Knoten (7, 2, 10, 11) des Netzwerks als der Vergleichsschritt ausgeführt wird.

11. Computersystem (1), umfassend:
- mindestens einen ersten Knoten (7) und mindestens einen zweiten Knoten (2), die über eine Netzwerkverbindung (6) miteinander verbunden sind, um ein Computernetzwerk zu erzeugen,
- mindestens einen ersten Client (9) und mindestens einen zweiten Client (5),
- wobei der zweite Client (5) dazu ausgelegt ist, eine zweite Datenmenge zu erfassen, die mindestens einen geographischen Datenposten umfasst, der aus Netzwerkverkehr von mindestens einem Prozess, der auf mindestens einem Knoten (7, 2, 10, 11) des Computernetzwerks ausgeführt wird, abgeleitet wird, und zusätzlich mindestens einen Knotendatenposten umfasst,
- wobei der geographische Datenposten mit einem geographischen Standort assoziiert ist,
wobei das Computersystem (1) **dadurch gekennzeichnet ist, dass**
- der Knotendatenposten Informationen bezüglich des Prozesses, der auf dem mindestens einen Knoten (7, 2, 10, 11) ausgeführt wird, umfasst und
- der mindestens eine Knotendatenposten der zweiten Datenmenge mit dem mindestens einen geographischen Datenposten der zweiten Datenmenge verknüpft ist;
- wobei der erste Client (9) dazu ausgelegt ist, den mindestens einen geographischen Datenposten und den verknüpften mindestens einen Knotendatenposten der zweiten Datenmenge mit dem mindestens einen geographischen Datenposten und dem verknüpften mindestens einen Knotendatenposten einer bereitgestellten ersten Datenmenge zu vergleichen, und dazu ausgelegt ist, eine Warnung zu erzeugen, in dem Fall, dass die zweite Datenmenge mindestens eine Kombination des geographischen Datenpostens mit mindestens einem damit verknüpften zusätzlichen Knotendatenposten umfasst, für die keine entsprechende Kombination des geographischen Datenpostens mit mindestens einem damit verknüpften zusätzlichen Knotendatenposten in der ersten Datenmenge gefunden werden kann.

12. Computersystem (1) nach Anspruch 11 zum Ausführen eines Verfahrens nach einem der Ansprüche 1-10.

## Revendications

1. Procédé d'identification d'une intrusion dans un réseau informatique (1) comprenant au moins deux noeuds (7, 2, 10, 11), le procédé comprenant les étapes suivantes :
- fourniture d'un premier ensemble de données comprenant au moins un élément de données géographiques associé à une localisation géographique et comprenant en outre au moins un élément de données de noeud comprenant des informations concernant un processus exécuté sur un noeud (7, 2, 10, 11), dans lequel le ou les éléments de données de noeud du premier ensemble de données sont liés à l'élément ou aux éléments de données géographiques du premier ensemble de données ;
- collecte d'un second ensemble de données comprenant au moins un élément de données géographiques issu du trafic réseau d'au moins un processus exécuté sur au moins un noeud (7, 2, 10, 11) du réseau informatique et comprenant en outre au moins un élément de données de noeud,
**caractérisé en ce que**
l'élément de données géographiques du second ensemble de données est associé à une localisation géographique,
l'élément de données de noeud du second ensemble de données comprend des informations concernant le processus exécuté sur le ou les noeuds (7, 2, 10, 11) et l'élément ou les éléments de données de noeud du second ensemble de données sont liés à l'élément ou aux éléments de données géographiques du second ensemble de données ;
- la comparaison de l'élément ou des éléments de données géographiques et de l'élément ou des éléments de données de noeud liés du second ensemble de données à l'élément ou aux éléments de données géographiques et à l'élément ou aux éléments de données de noeud du premier ensemble de données ; et
- la génération d'une alerte dans le cas où le second ensemble de données comprend au moins une combinaison d'un élément de données géographiques avec au moins un élément de données de noeud supplémentaire qui lui est lié pour laquelle aucune combinaison correspondante d'un élément de données géographiques avec un élément ou des éléments de données de noeud supplémentaires qui lui sont liés ne peut être trouvée dans le premier ensemble de données.

2. Procédé selon l'une quelconque des revendications précédentes,
dans lequel l'élément ou les éléments de données géographiques des premier et second ensembles de données comprennent au moins une adresse IP, une partie d'une adresse IP de source, une partie d'une adresse IP de destination et/ou un élément de données de localisation dérivé de l'adresse IP de source IP ou de l'adresse IP de destination et, facultativement, au moins l'un des éléments sélectionnés dans le groupe comprenant le port de source, le port de destination et le type de trafic réseau.

3. Procédé selon la revendication 1 ou 2,
dans lequel le second ensemble de données comprend au moins un nombre prédéterminé x d'éléments de données géographiques identiques.

4. Procédé selon l'une quelconque des revendications précédentes,
dans lequel les éléments de données géographiques du second ensemble de données sont collectés sur une période de temps prédéterminée y.

5. Procédé selon l'une quelconque des revendications précédentes, dans lequel l'élément ou les éléments de données géographiques du premier ensemble de données sont fournis en recueillant au moins un élément de données géographiques dérivé du trafic réseau d'au moins un processus exécuté sur au moins un noeud (7, 2, 10, 11) du réseau informatique (1).

6. Procédé selon l'une quelconque des revendications précédentes, dans lequel le second ensemble de données comprend au moins un nombre prédéterminé x de combinaisons identiques d'un élément de données géographiques avec au moins un élément de données de noeud supplémentaire lié à celles-ci.

7. Procédé selon les revendications précédentes 1 à 3, 5 ou 6,
dans lequel les combinaisons de l'élément de données géographiques avec au moins un élément de données de noeud supplémentaire lié à celui-ci dans le second ensemble de données sont collectées sur une période de temps prédéterminée y.

8. Procédé selon l'une quelconque des revendications précédentes,
dans lequel l'élément ou les éléments de données de noeud du premier et second ensemble de données comprennent au moins un élément sélectionné dans le groupe comprenant le nom du processus, le parcours du processus, l'ID du processus, la somme de contrôle du processus et l'adresse de contrôle d'accès au support, MAC.

9. Procédé selon l'une quelconque des revendications précédentes, dans lequel la collecte du second ensemble de données est effectuée sur le même noeud (7, 2, 10, 11) du réseau (1) dont le trafic réseau est analysé.

10. Procédé selon l'une quelconque des revendications précédentes, dans lequel la collecte du second ensemble de données est effectuée sur un noeud (7, 2, 10, 11) du réseau (1) différent de celui de l'étape de comparaison.

11. Système informatique (1) comprenant :
- au moins un premier noeud (7) et au moins un second noeud (2) interconnectés par l'intermédiaire d'une liaison réseau (6) pour créer un réseau informatique,
- au moins un premier client (9) et au moins un second client (5),
- le second client (5) est destiné à recueillir un second ensemble de données comprenant au moins un élément de données géographiques issu du trafic réseau d'au moins un processus exécuté sur au moins un noeud (7, 2, 10, 11) du réseau informatique et comprenant en outre au moins un élément de données de noeud,
- l'élément de données géographiques est associé à une localisation géographique, le système informatique (1) étant **caractérisé en ce que**
- l'élément de données de noeud comprend des informations concernant le processus exécuté sur le ou les noeuds (7, 2, 10, 11) et
- l'élément ou les éléments de données de noeud du second ensemble de données sont liés à l'élément ou aux éléments de données géographiques du second ensemble de données ;
- le premier client (9) est destiné à comparer l'élément ou les éléments de données géographiques et l'élément ou les éléments de données de noeud qui lui sont liés du second ensemble de données à l'élément ou aux éléments de données géographiques et à l'élément ou aux éléments de données de noeud du premier ensemble de données fourni et est destiné à générer une alerte dans le cas où le second ensemble de données comprend au moins une combinaison de l'élément de données géographiques avec au moins un élément de données de noeud supplémentaire qui lui est lié pour lequel aucune combinaison correspondante de l'élément de données géographiques avec au moins un élément de données de noeud supplémentaire qui lui est lié ne peut être trouvée dans le premier ensemble de données.

12. Système informatique (1) selon la revendication 11 pour mettre en oeuvre un procédé selon l'une quelconque des revendications 1 à 10.
